# EUROPEAN PATENT APPLICATION

(11) **EP 4 512 280 A1**
(43) Date of publication of application: **26.02.2025**
(21) Application number: 24196013.7
(22) Date of filing: 22.08.2024
(51) Int. Cl.: A47B 96/14, A47F 3/04

(54) **ACCESSORY BRACKET AND DISPLAY CABINET**

(30) Priority: 22.08.2023 CN 202311061969
(71) Applicant: Carrier Corporation, Palm Beach Gardens, FL 33418 (US)
(72) Inventor: WANG, Zewei, Shanghai 201206 (CN); ZHOU, Bo, Shanghai 201206 (CN); LAN, Gongpeng, Shanghai 201206 (CN)
(74) Representative: Dehns

(57) **Abstract**

An accessory bracket 15 is to be used in conjunction with a display cabinet including a panel 14, the accessory bracket 15 including: an outer frame 151; a curtain mounting portion; and a lighting unit mounting portion. The outer frame 151 includes a fixing portion configured to fix the accessory bracket 15 to the panel 14 of the display cabinet 1. The curtain mounting portion is disposed on the outer frame 151 and configured to mount a curtain capable of being coiled or unfolded. The lighting unit mounting portion is disposed on an end portion of the outer frame 151 away from the panel 14. The outer frame 151, the curtain mounting portion, and the lighting unit mounting portion are integrally connected.

## Description

### Technical Field

The present invention relates to the field of display cabinets, in particular to an accessory bracket and a display cabinet including the same.

### Background Art

A display cabinet is used for displaying and exhibiting articles therein. In actual use, the display cabinet may be provided with various accessories such as a curtain, a lamp, and a camera to meet different requirements.

However, due to limitations of factors such as a space or a structure of the display cabinet, it is difficult to mount a plurality of accessories in the display cabinet, or after the accessories are mounted in the display cabinet, use effects of the accessories are poor.

### Summary of the Invention

The present invention aims to provide an accessory bracket and a display cabinet to at least solve or alleviate some of the problems existing in the related art.

A first aspect provides an accessory bracket to be used in conjunction with a display cabinet including a panel, the accessory bracket including: an outer frame; a curtain mounting portion; and a lighting unit mounting portion. The outer frame includes a fixing portion configured to fix the accessory bracket to the panel of the display cabinet. The curtain mounting portion is disposed on the outer frame and configured to mount a curtain capable of being coiled or unfolded. The lighting unit mounting portion is disposed on an end portion of the outer frame away from the panel. The outer frame, the curtain mounting portion, and the lighting unit mounting portion are integrally connected.

Optionally, the lighting unit mounting portion is a lamp strip clamp, the lamp strip clamp includes a lamp strip clamp bottom plate, a first clamp arm, and a second clamp arm, the first clamp arm and the second clamp arm are respectively arranged at two ends of the lamp strip clamp bottom plate, and the lamp strip clamp bottom plate is inclined relative to the panel along an extending direction of the lamp strip clamp bottom plate.

Optionally, the accessory bracket further includes: an air deflector disposed at one end of the accessory bracket away from the panel.

Optionally, the air deflector includes an extension portion extending from the end portion of the outer frame in a direction further away from the panel, and a bending portion formed by bending one end of the extension portion, and the first clamp arm is closer to the bending portion than the second clamp arm, and an air duct having a width that decreases along a direction away from the extension portion is defined between the bending portion and the first clamp arm.

Optionally, the extension portion has a hollow structure having a plurality of openings distributed along a length direction.

Optionally, the outer frame includes a top plate, a bottom plate, and a side plate, the top plate and the bottom plate are oppositely arranged at two ends of the side plate, an area enclosed by the top plate, the bottom plate, and the side plate is used for accommodating the curtain, and the unfolded curtain extends out of the outer frame through between the top plate and the bottom plate.

Optionally, the curtain mounting portion is a clamping structure, the clamping structure includes a clamping structure main body and a hook, the clamping structure main body extends from the top plate in a direction parallel to the side plate, and the hook is formed by bending an end portion of the clamping structure main body in a direction close to the side plate.

Optionally, the fixing portion is a hole and is disposed at one end of the top plate away from the side plate, and the accessory bracket is fixedly connected to the panel by using a fastener passing through the hole.

Optionally, the panel has a groove on an inner side thereof, the outer frame is fixed in the groove, and the lighting unit mounting portion protrudes out of the groove.

A second aspect provides a display cabinet, including: a first wall; a second wall disposed opposite to the first wall, a space for accommodating an article to be displayed being formed between the first wall and the second wall; a panel disposed at an end portion of the first wall and extending in a direction close to the second wall; an accessory bracket including an outer frame, a curtain mounting portion, and a lighting unit mounting portion which are integrally connected, the outer frame including a fixing portion, the accessory bracket being fixed to an inner side of the panel by using the fixing portion, the curtain mounting portion being disposed on the outer frame, and the lighting unit mounting portion being disposed at an end portion of the outer frame away from the panel; a curtain mounted on the curtain mounting portion and capable of being coiled or unfolded to correspondingly open or shield the space; and a lighting unit mounted on the lighting unit mounting portion to provide light for the article to be displayed in the space.

Optionally, the lighting unit is mounted toward the space at an angle inclined to the panel.

Optionally, the display cabinet further includes: an air outlet disposed on the first wall and adjacent to the panel, the accessory bracket further includes an air deflector corresponding to one end of the air outlet close to the panel to guide an airflow blown out from the air outlet in a direction away from the panel.

Optionally, an air duct defined by the air deflector has a width that decreases along a direction away from the air outlet.

Optionally, the air deflector includes an extension portion, which extends from the end portion of the outer frame in a direction further away from the panel and has a hollow structure having a plurality of openings distributed along a length direction.

Optionally, the outer frame includes a top plate, a bottom plate, and a side plate, the top plate and the bottom plate are oppositely arranged at two ends of the side plate, an area enclosed by the top plate, the bottom plate, and the side plate is used for accommodating the curtain, and the unfolded curtain extends out of the outer frame through between the top plate and the bottom plate.

Optionally, the curtain mounting portion is a clamping structure, the clamping structure includes a clamping structure main body and a hook, the clamping structure main body extends from the top plate in a direction parallel to the side plate, and the hook is formed by bending an end portion of the clamping structure main body in a direction close to the side plate.

Optionally, the fixing portion is a hole and is disposed at one end of the top plate away from the side plate, and the accessory bracket is fixedly connected to the panel by using a fastener passing through the hole.

Optionally, the panel has a groove on an inner side thereof, the outer frame is fixed in the groove, and the lighting unit mounting portion protrudes out of the groove.

Optionally, an end portion of the panel away from the first wall is bent inwardly to form a part of the groove.

Optionally, the display cabinet is a horizontal display cabinet.

Optionally, the display cabinet does not include a door body.

According to the accessory bracket of the first aspect, a plurality of accessories can be easily mounted in the display cabinet. According to the display cabinet of the second aspect, the accessory bracket is provided with a plurality of accessories, so that performance of the display cabinet is improved.

### Descriptions of the Drawings

FIG. 1 shows a perspective view of a display cabinet;
FIG. 2 shows a cross-sectional view of the display cabinet;
FIG. 3 is a partially enlarged view of an area A in FIG. 2;
FIG. 4 shows a schematic view of an accessory bracket mounted on a panel;
FIG. 5 shows a perspective view of the accessory bracket;
FIG. 6 shows a cross-sectional view of the accessory bracket;
FIG. 7 shows a schematic view of the display cabinet in use; and
FIG. 8 shows another perspective view of the accessory bracket.

### List of Reference Numerals:

Display cabinet 1, side wall 10, first wall 11, second wall 12, air outlet 13, first air curtain 1301, second air curtain 1302, panel 14, groove 141, panel front end surface 142, accessory bracket 15, outer frame 151, top plate 1511, fixing portion 150, bottom plate 1512, side plate 1513, clamping structure 152, clamping structure main body 1521, hook 1522, lamp strip clamp 153, first clamp arm 1531, second clamp arm 1532, lamp strip clamp bottom plate 1533, air deflector 154, extension portion 1541, bending portion 1542, curtain 16, lighting unit 17, space 18, air duct 19, and fastener 20.

### Detailed Description

A detailed description of one or more embodiments of the present invention are presented herein by way of exemplification and not limitation with reference to the Figures.

The terms "front", "rear", "top", "bottom", and the like herein refer to a viewing angle of an object to which the display cabinet faces, and specifically, one end close to the object is the front, and one end far away from the object is the rear.

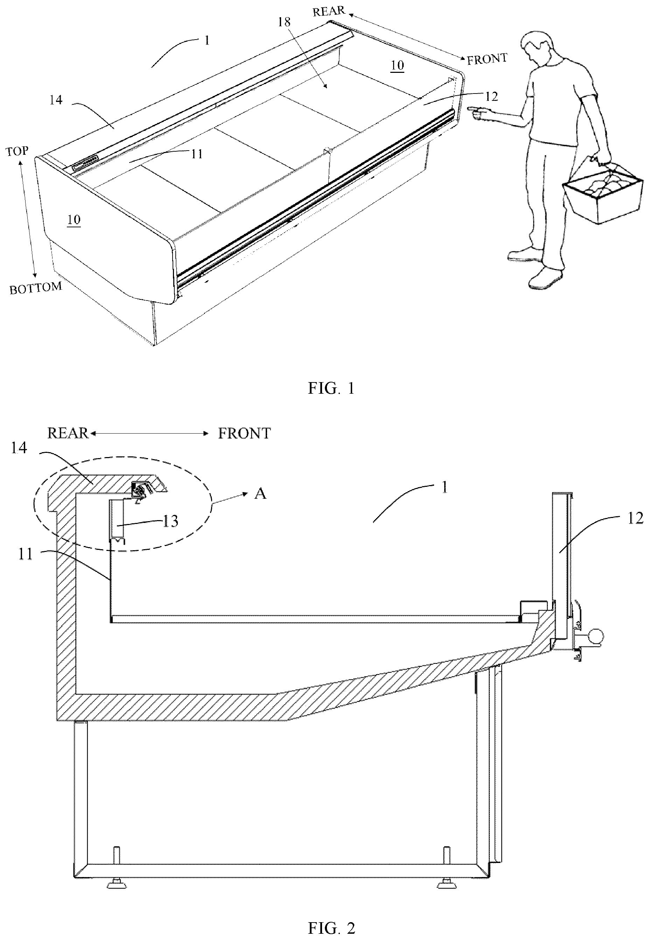

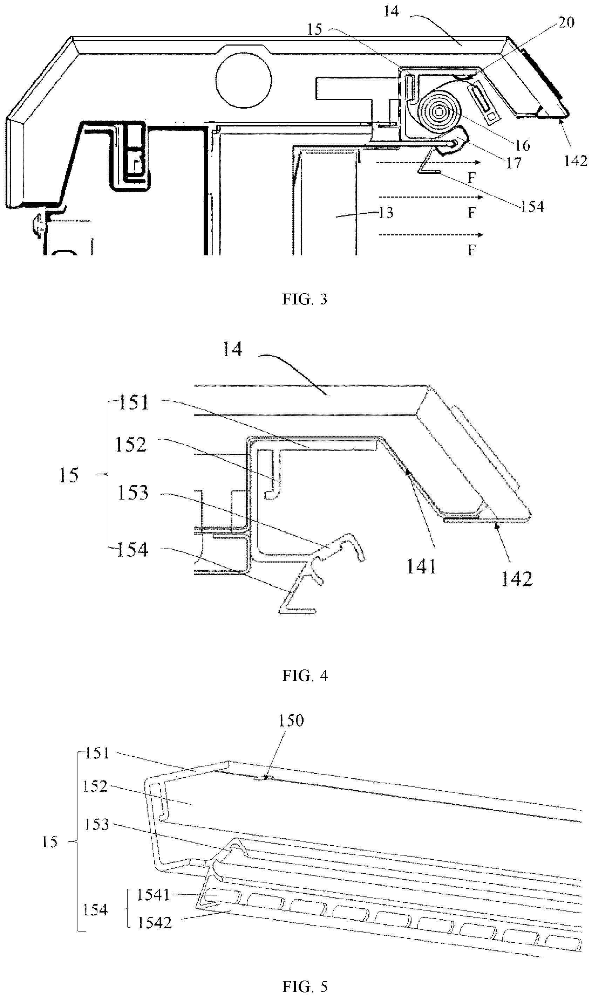

FIG. 1 shows a perspective view of a display cabinet, FIG. 2 shows a cross-sectional view of the display cabinet 1, and FIG. 3 is a partially enlarged view of an area A in FIG. 2. With reference to FIG. 1 to FIG. 3, the display cabinet 1 includes: a first wall 11; a second wall 12 disposed opposite to the first wall 11, a space 18 for accommodating an article to be displayed being formed between the first wall 11 and the second wall 12; a panel 14 disposed at an end portion of the first wall 11 and extending in a direction close to the second wall 12; an accessory bracket 15 fixed to an inner side of the panel 14; and a curtain 16 and a lighting unit 17 mounted on the accessory bracket 15. The curtain 16 is capable of being coiled or unfolded to correspondingly open or shield the space 18. The lighting unit 17 provides light for an article to be displayed in the space 18.

Since the curtain 16 is mounted on the accessory bracket 15 on the inner side of the panel 14, the curtain 16 is mounted at a position inside the panel 14, and can be conveniently coiled or unfolded. Since the lighting unit 17 is mounted on the accessory bracket 15 on the inner side of the panel 14, the lighting unit 17 is mounted at a position inside the panel 14, which can improve a lighting effect of the lighting unit 17. Since the display cabinet 1 includes the accessory bracket 15 fixed to the inner side of the panel 14, a limitation of a space or a structure at the position inside the panel 14 is overcome to a certain extent, so that both the curtain 16 and the lighting unit 17 can be mounted at the position inside the panel 14, and the mounting position is beneficial to improve use effects of the curtain 16 and the lighting unit 17.

Although the space 18 for accommodating the article to be displayed in the display cabinet 1 shown in the illustrated embodiment is a rectangular-like space 18, in an alternative embodiment, the space 18 for accommodating the article to be displayed in the display cabinet 1 may be a sector-like space 18, a trapezoid-like space 18, or the like.

Although both the first wall 11 and the second wall 12 in the display cabinet 1 shown in the illustrated embodiment extend in a vertical direction and heights thereof are approximately equal, in an alternative embodiment, the second wall 12 may be inclined, and a height thereof may be less than the height of the first wall 11.

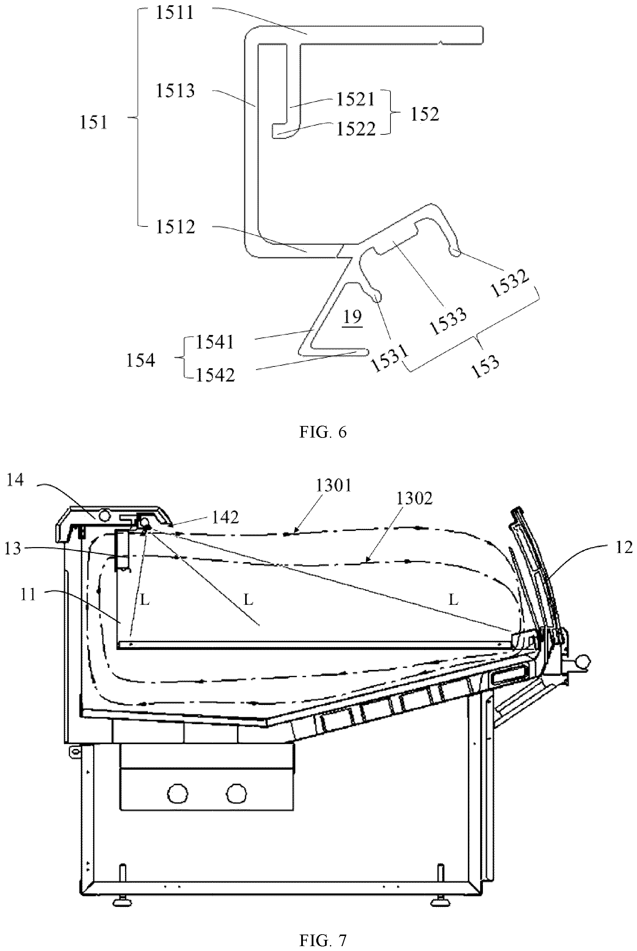

Next, the accessory bracket 15 will be described with reference to FIG. 4 to FIG. 6. FIG. 4 shows a schematic view of the accessory bracket 15 mounted on the panel 14, FIG. 5 shows a perspective view of the accessory bracket 15, and FIG. 6 shows a cross-sectional view of the accessory bracket 15. The accessory bracket 15 includes: an outer frame 151 including a fixing portion 150 for fixing the accessory bracket 15 to the panel 14 of the display cabinet 1; a curtain mounting portion disposed on the outer frame 151 and used for mounting the curtain 16 capable of being coiled or unfolded; and a lighting unit mounting portion disposed on an end portion of the outer frame 151 away from the panel 14. The outer frame 151, the curtain mounting portion, and the lighting unit mounting portion are integrally connected.

Since the accessory bracket 15 includes the outer frame 151, the curtain mounting portion, and the lighting unit mounting portion, limitations of factors such as a space or a structure of the display cabinet 1 can be overcome to a certain extent, so that the curtain 16 and the lighting unit 17 can be easily mounted in the display cabinet 1 at the same time. Since the outer frame 151, the curtain mounting portion, and the lighting unit mounting portion are integrally connected, it is beneficial to simplify fixed connection between the accessory bracket 15 and the panel 14, so that the mounting of the accessory bracket 15 is less limited by the factors such as the space or the structure of the panel 14, thereby improving universality of the accessory bracket 15.

The accessory bracket 15 shown in the illustrated embodiment is fixed to a front end of the panel 14 on a top of the display cabinet 1. In an alternative embodiment, the accessory bracket 15 may be fixed to any position of the panel 14 in the display cabinet 1 suitable for mounting the accessory bracket 15.

The accessory bracket 15 shown in the illustrated embodiment extends continuously in a length direction of the panel 14. In an alternative embodiment, two or more accessory brackets 15 having a shorter length may be arranged at intervals in the length direction of the panel 14.

In some embodiments, the outer frame 151, the curtain mounting portion, and the lighting unit mounting portion are integrally connected by injection molding, fusing, welding, or the like, so that the outer frame 151, the curtain mounting portion, and the lighting unit mounting portion are difficult to be separated, or substantially cannot be separated, and cannot return to a connected state after being separated.

In some embodiments, as shown in FIG. 6, the lighting unit mounting portion is a lamp strip clamp 153, the lamp strip clamp 153 includes a lamp strip clamp bottom plate 1533, a first clamp arm 1531, and a second clamp arm 1532, and the first clamp arm 1531 and the second clamp arm 1532 are respectively arranged at two ends of the lamp strip clamp bottom plate 1533. The lamp strip clamp bottom plate 1533 is inclined relative to the panel 14 along an extending direction of the lamp strip clamp bottom plate 1533, in other words, the lighting unit 17 is mounted toward the space 18 at an angle inclined to the panel 14. By inclining the lamp strip clamp bottom plate 1533 relative to the panel 14 along the extending direction of the lamp strip clamp bottom plate 1533, the lighting unit 17 mounted on the lamp strip clamp 153 has an inclination angle, thereby increasing coverage of an illumination range of the lighting unit 17 on the space 18 for accommodating the article to be displayed. A suitable inclination angle of the lighting unit 17 may be calculated according to parameters such as a beam angle of the lighting unit 17, a position of the lighting unit 17 in the display cabinet 1, and a size of the space 18 for accommodating the article to be displayed. An inclination angle of the lamp strip clamp bottom plate 1533 is adapted to the calculated suitable inclination angle of the lighting unit 17.

In some embodiments, the lighting unit mounting portion is a magnetic attraction panel to which the lighting unit 17 can be attracted. The magnetic attraction panel may provide a wireless power supply function.

In some embodiments, the lighting unit 17 is an elongated lighting lamp. In some embodiments, the lighting unit 17 is a collection of a plurality of block lighting lamps.

In some embodiments, as shown in FIG. 6, the accessory bracket 15 includes an air deflector 154. Next, with reference to FIG. 3, the display cabinet 1 includes an air outlet 13 disposed on the first wall 11 and adjacent to the panel 14. The air deflector 154 is disposed at one end of the accessory bracket 15 away from the panel 14. The air deflector 154 corresponds to one end of the air outlet 13 close to the panel 14 to guide an airflow (F) blown out from the air outlet 13 in a direction away from the panel 14, thereby alleviating a condensation problem of a panel front end surface 142 caused by the airflow (F) continuously blowing to the panel 14.

In some embodiments, there is no obvious boundary between the air deflector 154 and the lamp strip clamp 153, and one structure may have a function of guiding the airflow (F) blown out from the air outlet 13 to the direction away from the panel 14 while also having a function of mounting the lighting unit 17.

In some embodiments, the outer frame 151, the curtain mounting portion, the lighting unit mounting portion, and the air deflector 154 are integrally connected.

In some embodiments, as shown in FIG. 6, the air deflector 154 includes: an extension portion 1541 extending from the end portion of the outer frame 151 to a direction further away from the panel 14; and a bending portion 1542 formed by bending one end of the extension portion 1541. The first clamp arm 1531 is closer to the bending portion 1542 than the second clamp arm 1532, and an air duct 19 having a width that decreases along a direction away from the extension portion 1541 is defined between the bending portion 1542 and the first clamp arm 1531, that is, the width of the air duct 19 defined by the air deflector 154 decreases along a direction away from the air outlet 13 with reference to FIG. 3 and FIG. 7. A part of the airflow (F) blown out from the air outlet 13 passes through the air duct 19 gradually decreasing in the width formed by the bending portion 1542 and the first clamp arm 1531, and is extruded by the air duct 19 to form a first air curtain 1301 having a relatively high flow rate. A part of the airflow (F) blown out from the air outlet 13 does not pass through the air duct 19 and forms a second air curtain 1302 having a relatively slow flow rate. The first air curtain 1301 having a relatively high flow rate is closer to a front side of the display cabinet 1, the second air curtain 1302 having a relatively slow flow rate is closer to a rear side of the display cabinet 1, or in other words, the first air curtain 1301 having a relatively high flow rate is located outside the second air curtain 1302 having a relatively slow flow rate, so that direct exchange between air in the display cabinet 1 and outside air can be reduced, which is beneficial to stability of a temperature in the display cabinet 1, and therefore an energy saving effect is achieved. Moreover, the airflow (F) blown out from the air outlet 13 has an increased flow rate and a more stable flow direction, and is less likely to blow to the panel front end surface 142, and thus the condensation problem of the panel front end surface 142 is alleviated.

In some embodiments, as shown in FIG. 5, the extension portion 1541 has a hollow structure having a plurality of openings distributed along a length direction. Specifically, the hollow structure includes a row of long holes arranged at intervals. Through CFD simulation, the air deflector 154 shown in the illustrated embodiment has a better rectification effect on the airflow (F) blown out from the air outlet 13.

In some embodiments, the extension portion 1541 has an annular structure having an opening for the airflow (F) to pass through and enter into the air duct 19.

In some embodiments, as shown in FIG. 3 and FIG. 6, the outer frame 151 includes a top plate 1511, a bottom plate 1512, and a side plate 1513, the top plate 1511 and the bottom plate 1512 are oppositely arranged at two ends of the side plate 1513, an area enclosed by the top plate 1511, the bottom plate 1512, and the side plate 1513 is used for accommodating the curtain 16, and the unfolded curtain 16 extends out of the outer frame 151 through between the top plate 1511 and the bottom plate 1512. The outer frame 151 is fixed in a groove 141 on the inner side of the panel 14. A part of the groove 141 is formed by inwardly bending an end portion of the panel 14 away from the first wall 11. The outer frame 151 is fixed in the groove 141 on the inner side of the panel 14, so that the display cabinet 1 is more beautiful. A structure of the outer frame 151 matches a shape of the groove 141 on the inner side of the panel 14, so that the panel 14 can support and stabilize the accessory bracket 15.

In some embodiments, the lighting unit mounting portion protrudes from the groove 141, in other words, the lighting unit mounting portion is at least partially located below the panel front end surface 142, so as to prevent a part of light (L) emitted by the lighting unit 17 from being blocked by the end portion of the panel 14 away from the first wall 11.

In some embodiments, as shown in FIG. 3 and FIG. 6, the curtain mounting portion is a clamping structure 152, the clamping structure 152 includes a clamping structure main body 1521 and a hook 1522, the clamping structure main body 1521 extends from the top plate 1511 in a direction parallel to the side plate 1513, and the hook 1522 is formed by bending an end portion of the clamping structure main body 1521 in a direction close to the side plate 1513. The clamping structure 152 occupies a small space and is simple in structure, which is beneficial to quickly and conveniently assemble and disassemble the curtain 16.

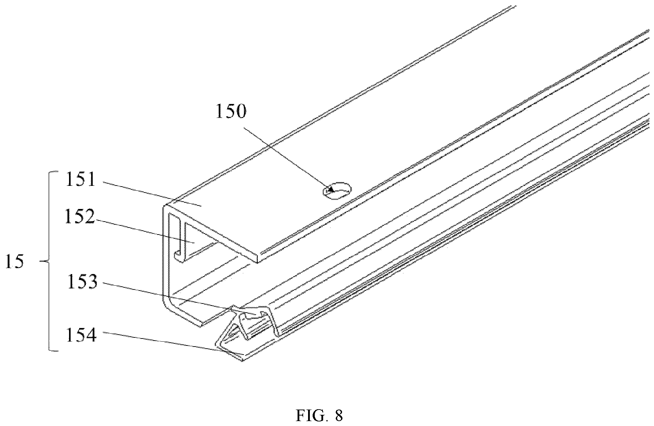

In some embodiments, as shown in FIG. 3 and FIG. 8, the fixing portion 150 is a hole and is disposed at one end of the top plate 1511 away from the side plate 1513, and the accessory bracket 15 is fixedly connected to the panel 14 by using a fastener 20 passing through the hole. The fixing portion 150 is disposed at the one end of the top plate 1511 away from the side plate 1513, so that when the accessory bracket 15 on which the curtain 16 is mounted is integrally fixed to the panel 14 of the display cabinet 1, the coiled curtain 16 does not shield a position of the fixing portion 150, and a process of mounting the accessory bracket 15 is more convenient. In some embodiments, the fixing portion 150 is a convex clamp, and the outer frame 151 is fixed to a corresponding recessed position of the panel 14 of the display cabinet 1 by the convex clamp.

Next, a method for mounting accessories to the display cabinet 1 through the accessory bracket 15 in the illustrated embodiment and a use case of the accessories in the display cabinet 1 will be described with reference to FIG. 1 to FIG. 8.

With reference to FIG. 1, the display cabinet 1 in the illustrated embodiment is a horizontal display cabinet 1 without a door body, and the display cabinet 1 has an air conditioning function and is usually disposed at a place such as a shopping mall or a supermarket. The display cabinet 1 has the accommodating space 18 for placing a commodity for a customer to select, and the space 18 includes the first wall 11, the second wall 12, and two side walls 10. An end portion of the first wall 11 is provided with the panel 14, and the accessory bracket 15 made of PVC material is mounted inside a front end of the panel 14.

Before the accessory bracket 15 is mounted on the panel 14, the curtain 16 and the lighting unit 17 may be mounted into the accessory bracket 15. Specifically, with reference to FIG. 3, the curtain 16 includes a curtain cloth, and a clamping block and a fixing member respectively located at two edges of the curtain cloth. By clamping the clamping block between the side plate 1513 of the outer frame 151 and the clamping structure 152, the curtain 16 is connected to the accessory bracket 15, and the coiled curtain cloth is placed in a space enclosed by the outer frame 151. Next, by clamping the lighting unit 17 between the first clamp arm 1531 and the second clamp arm 1532, the lighting unit 17 is connected to the accessory bracket 15. Further, by passing the fastener 20 (such as a self-tapping screw) through the hole (that is, the fixing portion 150) on the top plate 1511 of the accessory bracket 15 to enter the panel 14, the accessory bracket 15 on which the curtain 16 and the lighting unit 17 are mounted is fixed to the panel 14. A wire may be connected to an end portion of the lighting unit 17 to enable energization of the lighting unit 17.

When the display cabinet 1 is normally used, the lighting unit 17 is turned on, so that the light in the display cabinet 1 is more sufficient, thereby better displaying the commodity therein. An air conditioning device is turned on, a cold airflow (L) is blown out from the air outlet 13, under the guidance of the air deflector 154, the cold airflow (L) is blown to the commodity in the display cabinet 1 more, and is less likely to blow to the panel front end surface 142, thereby avoiding the condensation problem of the panel front end surface 142. The curtain 16 is limited by the inclined lamp strip clamp bottom plate 1533, and is coiled and placed in the space enclosed by the outer frame 151 without an external force. At night, the lighting unit 17 and the air conditioning device in the display cabinet 1 are generally closed, and the curtain 16 is unfolded to shield the space 18 for accommodating the commodity by pulling the fixing member of the curtain 16. In the unfolded state of the curtain 16, the fixing member of the curtain 16 may be connected to the second wall 12 of the display cabinet 1.

The above embodiment is merely a described embodiment of the present invention and is not intended to limit the scope of the present invention as defined by the appended claims. In addition, any modifications, equivalent substitutions, improvements, and the like may be made without departing from the scope of the present invention as defined by the appended claims.

## Claims

1. An accessory bracket to be used in conjunction with a display cabinet including a panel, the accessory bracket comprising:
an outer frame including a fixing portion configured to fix the accessory bracket to the panel of the display cabinet;
a curtain mounting portion disposed on the outer frame and configured to mount a curtain capable of being coiled or unfolded; and
a lighting unit mounting portion disposed on an end portion of the outer frame away from the panel, wherein
the outer frame, the curtain mounting portion, and the lighting unit mounting portion are integrally connected.

2. The accessory bracket according to claim 1, wherein
the lighting unit mounting portion is a lamp strip clamp,
the lamp strip clamp includes a lamp strip clamp bottom plate, a first clamp arm, and a second clamp arm, the first clamp arm and the second clamp arm are respectively arranged at two ends of the lamp strip clamp bottom plate, and
the lamp strip clamp bottom plate is inclined relative to the panel along an extending direction of the lamp strip clamp bottom plate.

3. The accessory bracket according to claim 2, comprising:
an air deflector disposed at one end of the accessory bracket away from the panel.

4. The accessory bracket according to claim 3, wherein
the air deflector includes an extension portion extending from the end portion of the outer frame in a direction further away from the panel and a bending portion formed by bending one end of the extension portion,
the first clamp arm is closer to the bending portion than the second clamp arm, and an air duct having a width that decreases along a direction away from the extension portion is defined between the bending portion and the first clamp arm,
optionally wherein
the extension portion has a hollow structure having a plurality of openings distributed along a length direction.

5. The accessory bracket according to any preceding claim, wherein
the outer frame includes a top plate, a bottom plate, and a side plate, the top plate and the bottom plate are oppositely arranged at two ends of the side plate,
an area enclosed by the top plate, the bottom plate, and the side plate is used for accommodating the curtain, and
the unfolded curtain extends out of the outer frame through between the top plate and the bottom plate.

6. The accessory bracket according to claim 5, wherein
the curtain mounting portion is a clamping structure,
the clamping structure includes a clamping structure main body and a hook, the clamping structure main body extends from the top plate in a direction parallel to the side plate, and the hook is formed by bending an end portion of the clamping structure main body in a direction close to the side plate,
optionally wherein
the fixing portion is a hole and is disposed at one end of the top plate away from the side plate, and the accessory bracket is fixedly connected to the panel by using a fastener passing through the hole.

7. The accessory bracket according to any preceding claim, wherein
the panel has a groove on an inner side thereof, the outer frame is fixed in the groove, and the lighting unit mounting portion protrudes out of the groove.

8. A display cabinet comprising:
a first wall;
a second wall disposed opposite to the first wall, a space for accommodating an article to be displayed being formed between the first wall and the second wall;
a panel disposed at an end portion of the first wall and extending in a direction close to the second wall;
an accessory bracket including an outer frame, a curtain mounting portion, and a lighting unit mounting portion which are integrally connected, the outer frame including a fixing portion, the accessory bracket being fixed to an inner side of the panel by using the fixing portion, the curtain mounting portion being disposed on the outer frame, and the lighting unit mounting portion being disposed at an end portion of the outer frame away from the panel;
a curtain mounted on the curtain mounting portion and capable of being coiled or unfolded to correspondingly open or shield the space; and
a lighting unit mounted on the lighting unit mounting portion to provide light for the article to be displayed in the space.

9. The display cabinet according to claim 8, wherein
the lighting unit is mounted toward the space at an angle inclined to the panel.

10. The display cabinet according to claim 8 or claim 9, comprising:
an air outlet disposed on the first wall and adjacent to the panel, wherein
the accessory bracket includes an air deflector corresponding to one end of the air outlet close to the panel to guide an airflow blown out from the air outlet in a direction away from the panel.

11. The display cabinet according to claim 10, wherein
an air duct defined by the air deflector has a width that decreases along a direction away from the air outlet,
optionally wherein
the air deflector includes an extension portion, which extends from the end portion of the outer frame in a direction further away from the panel and has a hollow structure having a plurality of openings distributed along a length direction.

12. The display cabinet according to any one of claims 8-11, wherein
the outer frame includes a top plate, a bottom plate, and a side plate, the top plate and the bottom plate are oppositely arranged at two ends of the side plate,
an area enclosed by the top plate, the bottom plate, and the side plate is used for accommodating the curtain, and
the unfolded curtain extends out of the outer frame through between the top plate and the bottom plate.

13. The display cabinet according to claim 12, wherein
the curtain mounting portion is a clamping structure,
the clamping structure includes a clamping structure main body and a hook, the clamping structure main body extends from the top plate in a direction parallel to the side plate, and
the hook is formed by bending an end portion of the clamping structure main body in a direction close to the side plate,
optionally wherein
the fixing portion is a hole and is disposed at one end of the top plate away from the side plate, and the accessory bracket is fixedly connected to the panel by using a fastener passing through the hole.

14. The display cabinet according to any one of claims 8-13, wherein
the panel has a groove on an inner side thereof, the outer frame is fixed in the groove, and the lighting unit mounting portion protrudes out of the groove,
optionally wherein
an end portion of the panel away from the first wall is bent inwardly to form a part of the groove.

15. The display cabinet according to any one of claims 8-14, wherein
the display cabinet is a horizontal display cabinet,
and/or wherein
the display cabinet does not include a door body.
